# EUROPEAN PATENT SPECIFICATION

(11) **EP 3 469 971 B1**
(45) Date of publication and mention of the grant of the patent: **30.12.2020**
(21) Application number: 18208175.2
(22) Date of filing: 06.05.2016
(51) Int. Cl.: A47K 13/16, A47K 17/00

(54) **APPARATUS FOR DISPENSING SHEETS OF MATERIAL**
VORRICHTUNG ZUR AUSGABE VON BLATTMATERIAL
APPAREIL DE DISTRIBUTION DE FEUILLES DE MATÉRIAU

(30) Priority: 12.05.2015 EP 15001414
(43) Date of publication of application: 17.04.2019
(62) Document number(s) of the earlier application(s) in accordance with Art. 76 EPC: 16793284.7 / 3 169 209
(73) Proprietor: Tranzonic Companies, Cleveland, OH 44143 (US); Vuylsteke, Kenneth F., Rancho Santa Fe, California 92067 (US); Blanchard, Michael Duane, Knoxville, Tennessee 37931 (US)
(72) Inventor: Vuylsteke, Kenneth F., Rancho Santa Fe, CA California 92067 (US); Blanchard, Michael Duane, Knoxville, TN Tennessee 37931 (US); Rist, Atilla, 86167 Augsburg (DE); Van Reenen, Hans, 2564 AW Den Hague (NL)
(74) Representative: Lawrie IP Limited

(56) References cited:
- US-A- 333 073
- US-A- 552 523
- US-A- 1 224 646
- US-A- 4 494 747

## Description

### BACKGROUND

Reliably dispensing sheets of material, including for example paper products from a stack of joined paper products, is often difficult. For example, the stack of material sheets may be joined at one end in a manner such that the application of an appropriate force upon a single sheet will cause it to separate from the remainder of material sheets. In many dispensers of such materials, a mechanical arm may contact the outermost sheet in the stack and tear it away from the remainder of the stack. However, the mechanical arm often contacts the sheet material in a very small area relative to the area of the sheet material itself.

As a result, where the material sheets do not have great tensile strength, the sheets are prone to tearing during dispensing. Additionally, the mechanical arm may not disengage the outermost sheet after the outermost sheet is torn away from the remainder of the stack, causing difficulty in the ultimate removal of the sheet material from the dispenser. One such example of the dispensing of material sheets is in the use of thin material sheets used to provide a sanitary barrier between a user of a device and the device, including for example, toilet seat covers.

EP 2 522 265 A1 discloses a sheet material dispensing apparatus according to the preamble of claim 1.

US 4494747 discloses a cash dispenser friction picker mechanism with a separator roller rotating to prevent more than one note from being removed from a stack.

What is needed is a more reliable apparatus for dispensing sheets of material.

### SUMMARY

According to the invention, a sheet material dispensing apparatus is provided in accordance with claim 1.

### BRIEF DESCRIPTION OF THE DRAWINGS

The accompanying figures illustrate various example apparatuses, and are used merely to illustrate various example embodiments.
**FIG. 1** illustrates a perspective view of an example arrangement of a dispensing apparatus **100.**
**FIG. 2A** illustrates a sectional view of an example arrangement of a dispensing apparatus **200.**
**FIG. 2B** illustrates a sectional view of an example arrangement of dispensing apparatus **200.**
**FIG. 3** illustrates an elevational view of an example arrangement of a dispensing apparatus.
**FIG. 4** illustrates an elevational view of an example arrangement of a sheet material card containing multiple sheets **412.**
**FIG. 5A** illustrates an example arrangement of a retracting roller **520,** a sheet supply roller **514,** and a sheet material **512.**
**FIG. 5B** illustrates an example arrangement of retracting roller **520,** sheet supply roller **514,** and sheet material **512.**
**FIG. 5C** illustrates an example arrangement of retracting roller **520,** sheet supply roller **514,** and sheet material **512.**
**FIG. 5D** illustrates an example arrangement of retracting roller **520,** sheet supply roller **514,** and sheet material **512.**
**FIG. 5E** illustrates an example arrangement of retracting roller **520,** sheet supply roller **514,** and sheet material **512.**
**FIG. 5F** illustrates an example arrangement of retracting roller **520,** sheet supply roller **514,** and sheet material **512.**
**FIG. 5G** illustrates an example arrangement of retracting roller **520,** sheet supply roller **514,** and sheet material **512.**
**FIG. 5H** illustrates an example arrangement of retracting roller **520,** sheet supply roller **514,** and sheet material **512.**
**FIG. 51** illustrates an example arrangement of retracting roller **520,** sheet supply roller **514,** and sheet material **512.**
**FIG. SJ** illustrates an example arrangement of retracting roller **520,** sheet supply roller **514,** and sheet material **512.**

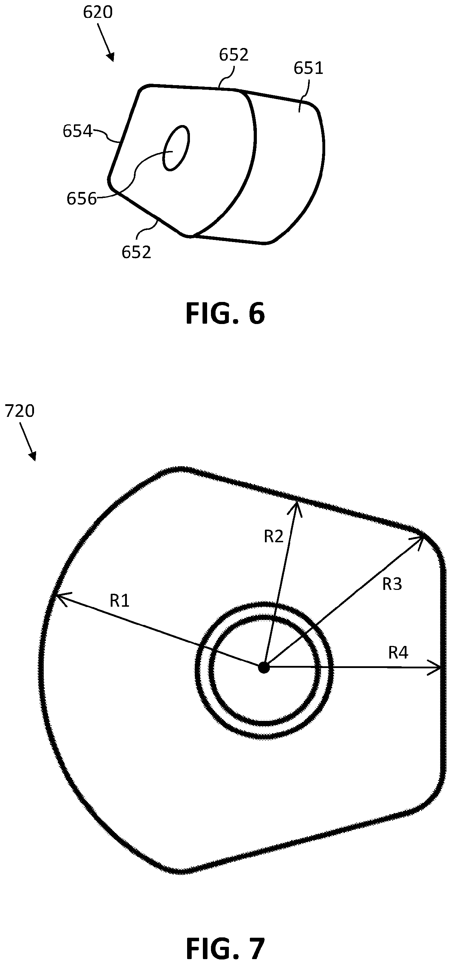

**FIG. 6** illustrates a perspective view of a retracting roller **620.**
**FIG. 7** illustrates an elevational view of a retracting roller **720.**

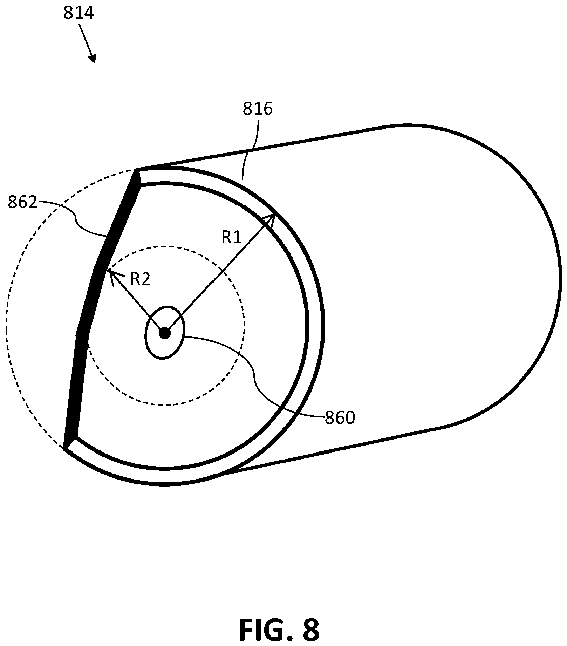

**FIG. 8** illustrates a perspective view of a sheet supply roller **814.**

### DETAILED DESCRIPTION

Sheet material dispensers, such as that disclosed in European Patent Application Publication No. EP2522265 (A1), utilize feed rollers in order to advance a sheet material from a sheet material storage device, such as a card of sheet products. The sheet material may be attached in a stack to the card (which may include a substrate configured to be attached to the interior of the dispenser) via a perforated, or otherwise limited, connection, such that the application of a force pulling the sheet material away from the card may cause it to separate at predesignated points. A single layer of sheet material is accordingly advanced out of the dispenser so as to permit manipulation of the sheet material by a user, including allowing a user to grasp the sheet material and remove it completely from the dispenser.

The dispensing apparatus disclosed herein may be used for a specific purpose, including for example, the dispensing of thin paper toilet seat covers. The toilet seat covers may be contained and/or dispensed in a substantially flat state. The toilet seat covers may be contained and/or dispensed in a substantially folded state, so as to reduce the necessary size of the dispensing apparatus. However, it is understood that the various dispensing apparatuses disclosed herein may be used to dispense any of a variety of sheet materials from an internal storage area, including for example: a paper, a cardboard, a polymer, a metal, an alloy, an organic material, a textile, and the like. Further, it is understood that the various dispensing apparatuses disclosed herein may be used to dispense any sheet material contained on a card of sheet products.

In one embodiment, the various dispensing apparatuses disclosed herein may be used to dispense a perforated towel. In one embodiment, the various dispensing apparatuses disclosed herein may be used to dispense at least one of a flat fold towel, a soft fold towel, an inter-fold towel, a continuous roll towel, and a perforated roll towel.

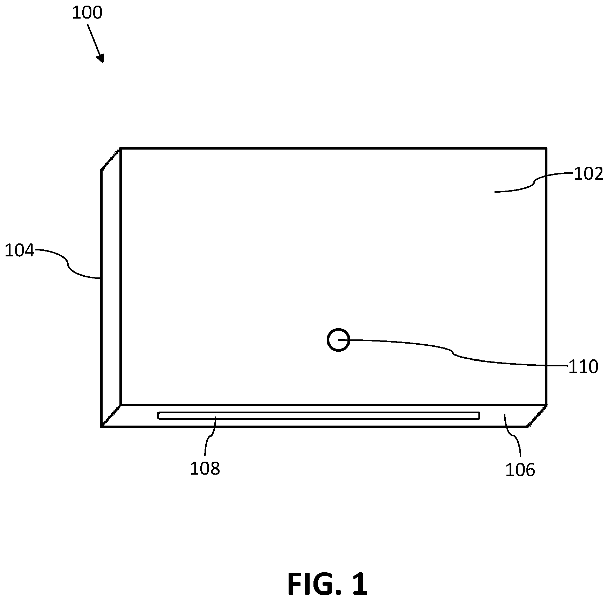

**FIG. 1** illustrates an example arrangement of a dispensing apparatus **100.** Apparatus **100** includes a cover 102 and a rear wall 104. It may include at least one side wall **106,** and a dispensing port **108.** Apparatus **100** may be formed from any of a variety of materials, including for example: a polymer, a metal, an alloy, an organic material, and the like. Apparatus **100** may include any of a variety of shapes necessary to store and dispense sheet materials.

Apparatus **100** may include at least one sensor **110.** At least one sensor **110** may include any of a variety of sensors configured to activate apparatus **100** to cause at least one article of sheet material to be dispensed. Sensor **110** may be operatively connected to at least one of a printed circuit board, a power source, and a power supply.

In one embodiment, sensor **110** is a capacitive sensor configured to sense the presence of a user's body part, such as the user's hand, in the proximity of apparatus **100.** The capacitive sensor may relay the sensing of the proximity of a user's hand to a printed circuit board (not shown), which may cause an electric motor (not shown) to rotate a supply roller (not shown), which causes a single article of a sheet material to be dispensed from apparatus **100.** Sensor **110** may be a capacitive sensor oriented within apparatus **100,** rather than on cover **102.** That is, no sensor may be present on cover **102** in one embodiment, but rather the sensor may be contained within apparatus **100b.**

In another embodiment, sensor **110** is an infrared sensor. Sensor **110** may be a passive infrared sensor. Sensor **110** may sense motion. Sensor **110** may sense motion of a user near apparatus **100.** Sensor **110** may sense motion of a user's hand waved near apparatus **100,** thus indicating that the user requests the dispensing of at least one article of a sheet material from apparatus **100.**

Sensor **110** may include a light sensor configured to sense lights activated near apparatus **100,** such that the activation of lights near apparatus **100** causes apparatus **100** to dispense an article of a sheet material. Sensor **110** may be a touch sensor, such that a user physically touches sensor **110** when the user desires the dispensing of a sheet material from apparatus **100.** Sensor **110** may include a microphone, and may sense noise caused by a user, which may cause apparatus **100** to automatically dispense a sheet material from apparatus **100** in anticipation of a user desiring an article of sheet material. Sensor **110** may include a microphone configured to permit voice recognition capabilities, such that a user may speak a specific word or term to cause the dispensing of a sheet material from apparatus **100.** Sensor **110** may sense temperature, such as the body heat of a user present near apparatus **100,** and may dispense an article of sheet material in anticipation of a user desiring an article of sheet material. Sensor **110** may include an RFID reader configured to sense the presence of a tag in the possession of a user, such that an article of sheet material is only dispensed to specific users. Sensor **110** may include a shock sensor configured to sense a user moving near apparatus **100,** touching apparatus **100,** tapping on apparatus **100** with an object or body part, or the like, after which apparatus **100** may dispense an article of a sheet material.

Sensor **110** may be in communication with an external surface of apparatus **100.** Sensor **110** may be contained completely internally within apparatus **100.**

In one embodiment, apparatus **100** does not include a sensor **110,** but rather includes a switch actuated by a user when requesting the dispensing of a an article of sheet material. The switch may include any of a variety of switches configured to close a circuit, including for example, a button. In another embodiment, apparatus **100** includes both sensor **110** and a switch.

In one embodiment, apparatus **100** may include, with or without sensor **110,** wireless networking capabilities, such that apparatus **100** may be remotely activated via a Bluetooth connection, a Wi-Fi connection, a radio signal, a cellular signal, or the like.

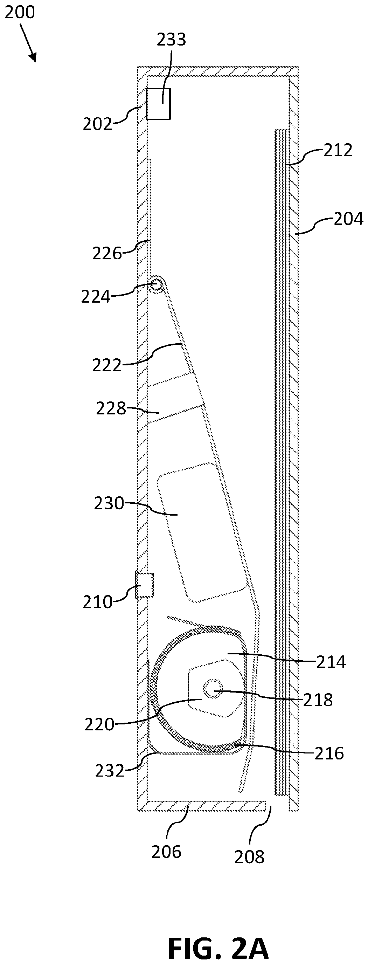

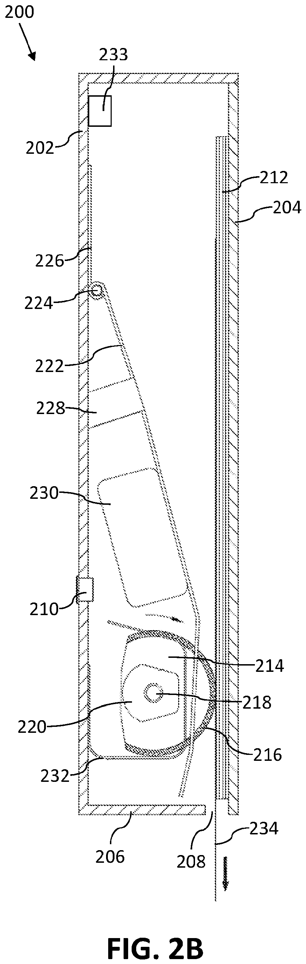

**FIGS. 2A** and **2B** illustrate an example arrangement of a dispensing apparatus **200.** Dispensing apparatus **200** includes a cover **202,** a rear wall **204,** and may include at least one side wall **206.** Dispensing apparatus **200** may include a sensor **210.**

Apparatus **200** may include at least one dispensing port **208.** Dispensing port **208** may be oriented in at least one side wall **206**. Dispensing port **208** may be configured and positioned to permit the passage of an article of a sheet material **212** to pass through dispensing port **208.**

Cover **202** may be selectively removable to allow one to access the interior of apparatus **200.** Cover **202** may be removably connected to rear wall **204** via any of a variety of mechanisms, including at least one of a hinge, a fastener, a friction fit, a sliding channel, clips, and the like. Cover **202** may be a door.

Rear wall **204** may be connected to a surface, such as a wall, a floor, a ceiling, another object, a post, and the like. Rear wall **204** may be permanently connected to a surface, or removably connected to a surface.

One or more sheet materials **212** are contained within apparatus **200.** Sheet materials **212** may be oriented in a stack. Sheet materials **212** may be oriented in a stack on a card, wherein the card contains the sheet materials **212** in the stack, and may act as a substrate to attach sheet materials **212** to an interior surface of apparatus **200.** Sheet materials **212** may be attached to, or oriented near, rear wall **204.**

Apparatus **200** includes a supply roller **214.** Supply roller **214** is configured to rotate. Supply roller **214** is operatively connected to a motor (not shown). Supply roller **214** is configured to contact at least one article of sheet material **212.** Supply roller **214** contacts at least one article of sheet material **212** while rotating, causing the at least one article of sheet material **212** to be dispensed through dispensing port **208.** Supply roller **214** may have an abrasive, soft, tacky, or otherwise increased friction exterior surface. Supply roller **214** may include a rubber coating **216** oriented about at least a portion of its exterior surface.

Supply roller **214** has truncated cylinder shape, such that when supply roller **214** is oriented as illustrated in **FIG. 2A****,** it is not in contact with sheet material **212.** As such, supply roller **214** has a radiused portion and a truncated portion. Rubber coating **216** may not extend completely about supply roller **214,** but rather, may only extend about that portion of supply roller that is radiused.

Supply roller **214** is operatively connected to a rotation shaft **218.** Shaft **218** is operatively connected to a motor (not shown). Supply roller **214** may be directly connected to shaft **218.** Shaft **218** may extend at least partially through supply roller **214.**

Apparatus **200** includes a retracting roller **220.** Retracting roller **220** includes a radiused portion and at least one flat, truncated portion. In one embodiment, retracting roller **220** includes a radiused portion, and three flat, truncated portions. Retracting roller **220** is operatively connected to a motor (not shown). Retracting roller **220** is configured to rotate. Retracting roller **220** may be configured to rotate with supply roller **214.** Retracting roller **220** may rotate directly with supply roller **214,** such that retracting roller **220** and supply roller **214** rotate the same amount as one another, for example, 360 degrees.

Retracting roller **220** is operatively connected to a rotation shaft **218.** Shaft **218** may be operatively connected to a motor (not shown). Retracting roller **220** may be directly connected to shaft **218.** Shaft **218** may extend at least partially through retracting roller **220.**

Retracting roller **220** includes a radiused portion that is directed in a first direction, while supply roller **214** may have a radiused portion that is directed in a second direction, and the first and second directions may be opposite one another (about 180 degrees from one another).

Apparatus **200** includes a mounting plate **222.** Mounting plate **222** may include one or more substantially planar portions separated by bends. Mounting plate **222** may be connected to an interior of cover **202,** rear wall **204,** or side wall **206.** Mounting plate **222** may be connected to an interior of apparatus **200** by any of a variety of mechanisms, including for example a fastener **224.** Mounting plate **222** may be connected to a fixing plate **226,** which may be connected to an interior of apparatus **200,** including for example, an interior surface of cover **202.** Mounting plate **222** may be connected to fixing plate **226** via fastener **224.** Fastener **224** may include any of a variety of fasteners. Fastener **224** may include a shaft forming a hinge. Mounting plate **222** may be hingedly connected to fixing plate **226.** Fastener **224** may be a fixing shaft.

Mounting plate **222** is operatively connected to at least one of supply roller **214,** retracting roller **220,** and shaft **218.** Mounting plate **222** is connected to supply roller **214,** retracting roller **220,** and shaft **218.**

Mounting plate **222** may be additionally connected to cover **202** via at least one supporting tab **228.** Supporting tabs **228** may act as struts to support mounting plate **222.** Mounting plate **222** deflects during dispensing of sheet material **212.** Mounting plate **222** may bend about at least one supporting tab **228.**

Mounting plate **222** includes an electronics box **230.** Electronics box **230** contains at least some of the electronics of apparatus **200.** Electronics box **230** may include for example a power source, such as a battery or a direct connection to electricity running through a building. Electronics box **230** may also include at least one printed circuit board. Electronics box **230** may include at least one programmable controller chip. Electronics box **230** may include circuitry and other wiring necessary for the operation of apparatus **200.** For example, sensor **210** may be in electrical communication with electronics box **230.** A motor (not shown) is in electrical communication with electronics box **230.** A power source may include at least one of: a battery, electricity from wall receptacle, electricity from a generator, a solar panel, a photo panel, and the like.

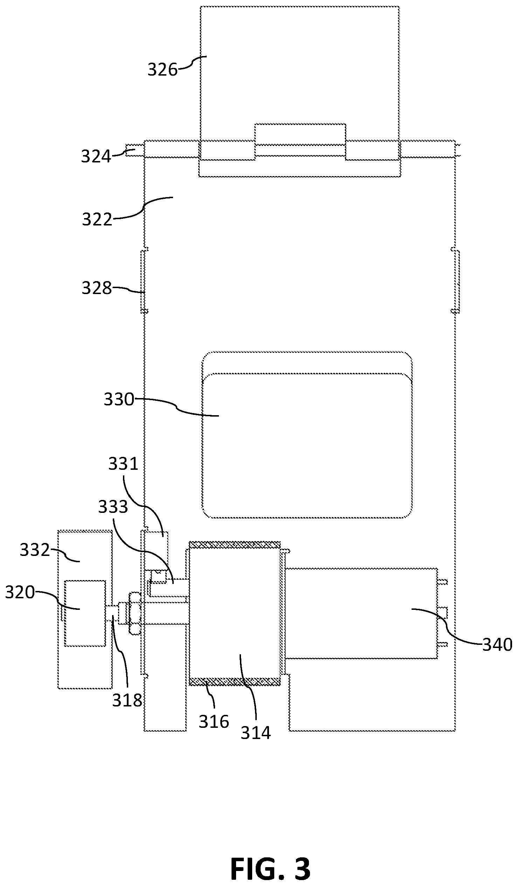

Electronics box **230** includes a programmable controller chip. The programmable controller chip is programmed to allow the adjustment of the period of time for which the motor (illustrated in **FIG. 3** at **340**) is operated to discharge one piece of sheet material 212 and may be programmed to allow at least one of the indication of a low accumulator or battery charge level by giving a light and/or audio signal; the recognition of the appropriate sheet material **212** (e.g., proprietary material); the connection of a coin recognition system; the storage and playback of promotional and awareness raising audio materials.

In one embodiment, a power source is located within dispenser **200,** but outside of electronics box **230.** The power source may be a battery oriented within dispenser **200** near mounting plate **222,** but outside of electronics box **230.**

Electronics box **230** may include a counter (not shown) configured to count the number of dispenses of sheet material **212.** Electronics box **230** may include a counter (not shown) configured to count the number of dispenses of sheet material **212** and alert a user when dispenser **200** is out of sheet material **212.** Electronics box **230** may include a counter (not shown) configured to count the number of dispenses of sheet material **212** and alert a user when dispenser **200** is almost out of sheet material **212** and has dispensed an amount specified. For example, a user may desired to be alerted when 10% or less of sheet material **212** is remaining in dispenser **200.** Thus, electronics box **230** may alert a user when 90% of sheet material **212** has been dispensed.

In one embodiment, dispenser **200** includes an aperture (not shown) in cover **202,** which may allow a user to visually inspect the quantity of sheet material **212** remaining in dispenser **200.** In one embodiment, a sheet material card (not shown) may be colored with a color significantly contrasting with the color of sheet material **212.** A user may visually inspect and recognize the color of the sheet material card, thus knowing that dispenser **200** is empty. Alternatively, rear wall **204** may include a color significantly contrasting with the color of sheet material **212.**

In one embodiment, dispenser **200** includes a light or other signal that is activated upon the dispensing of all of sheet material **212,** or a specified quantity of sheet material **212** (e.g., 90%).

In one embodiment, electronics box **230** may include a reset button, which reset button may indicator that a full stack of sheet material **212** has been inserted into dispenser **200,** after which electronics box **230** may start over its counting of the number of sheet materials **212** dispensed.

Mounting plate **222** comprising a biasing material, which when bent, may provide a force against bending in an attempt to be straight. Mounting plate **222** may comprise a spring steel, polymer, organic material, laminated material, alloy, composite, or the like.

Stated differently, when mounting plate **222** is deflected due to contact between supply roller **214** and sheet material **212,** mounting plate **222** provides a bias against this deflection, providing a force to keep supply roller **214** in contact with sheet material **212.** When mounting plate **222** is deflected due to contact between retracting roller **220** and a supporting plate **232** connected to an interior surface of apparatus **200,** mounting plate **222** may provide a bias against this deflection, providing a force to keep retracting roller **220** in contact with supporting plate **232.** Mounting plate **222** is flexible.

Supporting plate **232** may at least partially circumvent retracting roller **220.** Supporting plate **232** may be operatively connected to apparatus **200.** Supporting plate may be operatively connected to an interior surface of cover **202.** Supporting plate may be connected to an interior surface of cover **202.** Supporting plate may be connected to any interior surface of apparatus **200.**

Retracting roller **220** engages supporting plate **232** at some point during the rotation of retracting roller **220.** Retracting roller **220** is configured to engage supporting plate **232** to limit the translation of supply roller **214** toward sheet material **212.**

As illustrated in **FIG. 2B****,** a dispensed sheet **234** may be advanced through dispensing port **208.**

Dispenser **200** may include a code reader **233.** Code reader **233** may be configured to read a proprietary code located on one or more of sheet material **212,** a sheet material card (not shown), or the like. In one embodiment, code reader **233** seeks a proprietary code located on one or more of sheet material **212,** a sheet material card (not shown), or the like. If code reader **233** cannot locate the necessary proprietary code, dispenser **200** may be deactivated to prevent damage, jamming, or other difficulties caused by the dispensing of non-proprietary sheet material **212.**

Code reader **233** may be an RFID reader, where sheet material **212** or a sheet material card (not shown) includes a proprietary RFID tag.

Code reader **233** may be a magnetic sensing system. The magnetic sensing system code reader **233** may sense and/or read a magnetic strip oriented on sheet material **212** or a sheet material card (not shown). The magnetic strip may include proprietary codes to prevent use of non-proprietary sheet material **212.** The magnetic strip may be printed on sheet material **212** or a sheet material card. The magnetic strip may be adhered to sheet material **212** or a sheet material card.

Code reader **233** may include any reader, existing or to be developed in the future, that may communicate with sheet material **212** or a sheet material card to ensure that proprietary material is being dispensed from dispenser **200.**

Code reader **233** may be a bar code reader, where sheet material **212** or a sheet material card (not shown) includes a proprietary bar code.

**FIG. 3** illustrates an example arrangement of a dispensing apparatus. The apparatus includes a fixing plate **326,** a fastener **324,** a mounting plate **322,** at least one supporting tab **328,** an electronics box **330,** a supporting plate **332,** a retracting roller **320,** a supply roller **314,** the supply roller **314** having a rubber coating **316,** and a shaft **318** operatively connected to the retracting roller **320,** and the supply roller **314.**

A motor **340** is operatively connected to shaft **318.** Motor **340** causes shaft **318** to rotate, which in turn causes retracting roller **320** and supply roller **314** to rotate. As retracting roller **320** rotates, it disengages supporting plate **332,** which allows supply roller **314** to contact a sheet material (e.g., sheet material **212**). As supply roller **314** rotates, it pulls a single article of the sheet material from its stack and causes it to advance from the apparatus. As supply roller **314** continues to rotate, retracting roller **320** engages supporting plate **332,** causing supply roller **314** to retract away from the stack of sheet material, and thus allowing a user to withdraw the article of sheet material from the apparatus without restriction.

Motor **340** may be an electric motor powered by a battery oriented within the apparatus. Motor **340** may be an electric motor powered by an electrical source exterior to the apparatus.

An aperture may be formed in mounting plate **322** for the supply roller **314.** The aperture may allow supply roller **314** to extend beyond the plane of mounting plate **322** during supply roller **314**'s movement.

A microswitch **331** is fixed on mounting plate **322,** at the side toward supply roller **314.** A microswitch activating cam **333** extends from a side of supply roller **314.** Microswitch activating cam **333** contacts microswitch **331,** causing motor **340** to stop while supply roller **314** is in a retracted position. Microswitch **331** ensures that motor **340** only complete one single revolution (about 360 degrees) upon each activation of motor **340.**

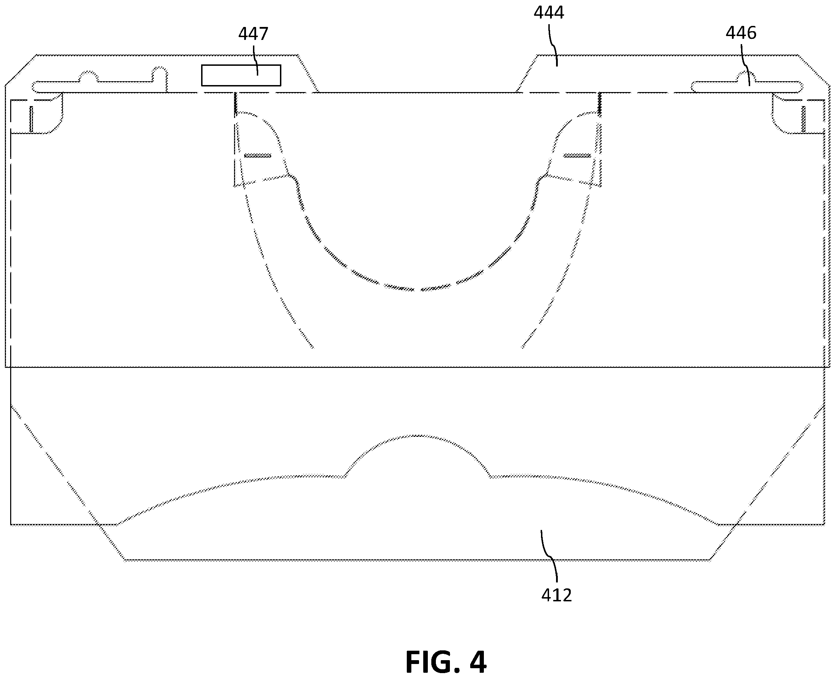

**FIG. 4** illustrates example arrangement of a sheet material card containing multiple sheets **412.** The sheet material card may include a plurality of sheets **412** stacked on top of one another. Sheets **412** may be folded, such that the dispenser apparatus would dispense a folded sheet, and the user would unfold the sheet prior to use. Sheets **412** may not be folded. Sheets **412** may be mounted directly to a substrate **444.** Substrate **444** may include at least one sheet mounting aperture **446** configured to engage at least a portion of a dispensing apparatus (e.g., rear wall **204** illustrated in **FIGS. 2A** and **2B**).

In one embodiment, sheets **412** are connected to substrate **444** via a perforated connection that is configured to break upon application of force from a supply roller. In another embodiment, sheets **412** are connected to substrate **444** via a limited connection that is configured to break upon application of force from a supply roller. In this manner, sheets **412** may be removed from substrate **444** without tearing sheet **412** in its main body. Sheets **412** may be connected to substrate **444** via staples, which may permit sheet **412** to be easily torn from substrate **444.** Sheets **412** may be connected to substrate **444** via an adhesive or glue, which may permit sheet **412** to be easily torn from substrate **444.**

The sheet material card may include a coded element **447.** Coded element **447** may be oriented on substrate **444.** Coded element **447** may be oriented on sheets **412.** Coded element **447** may include a proprietary RFID tag. Coded element **447** may include a proprietary bar code.

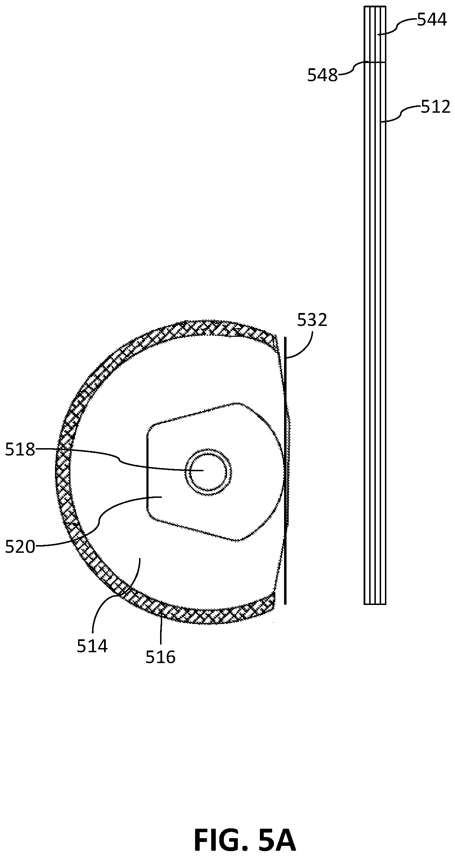

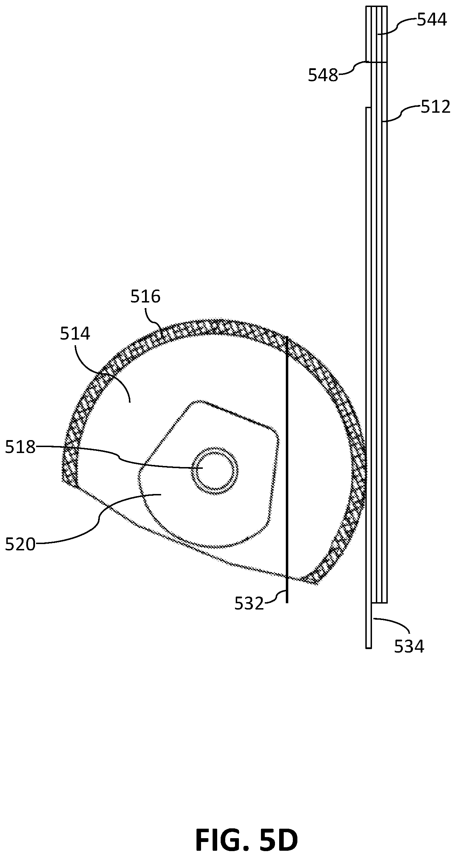

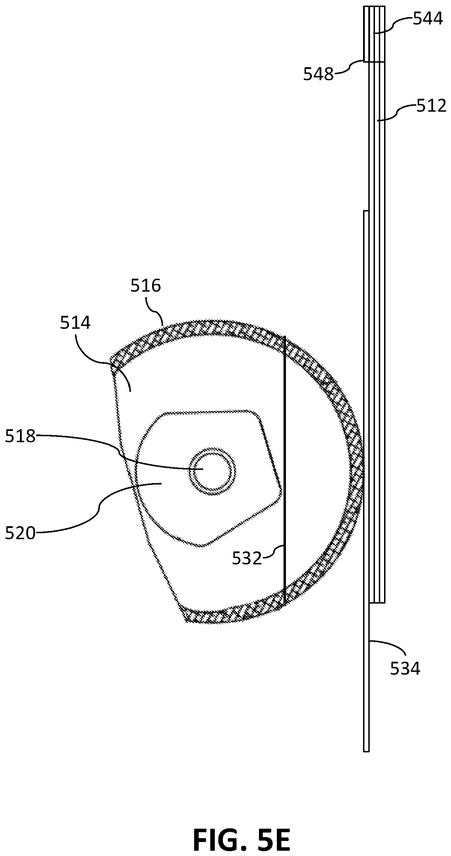

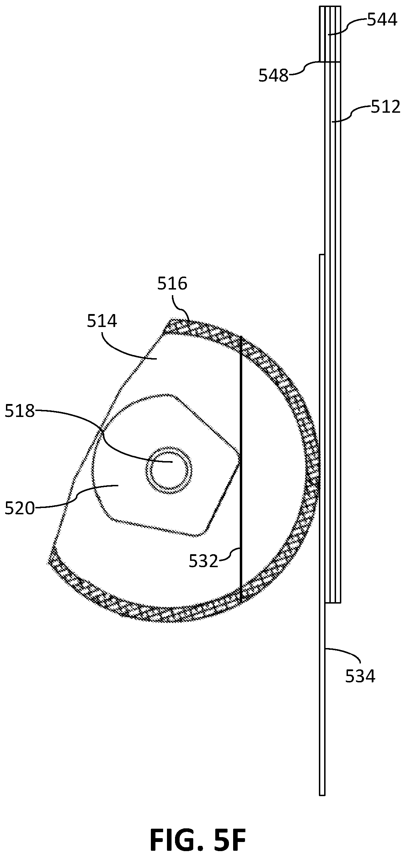

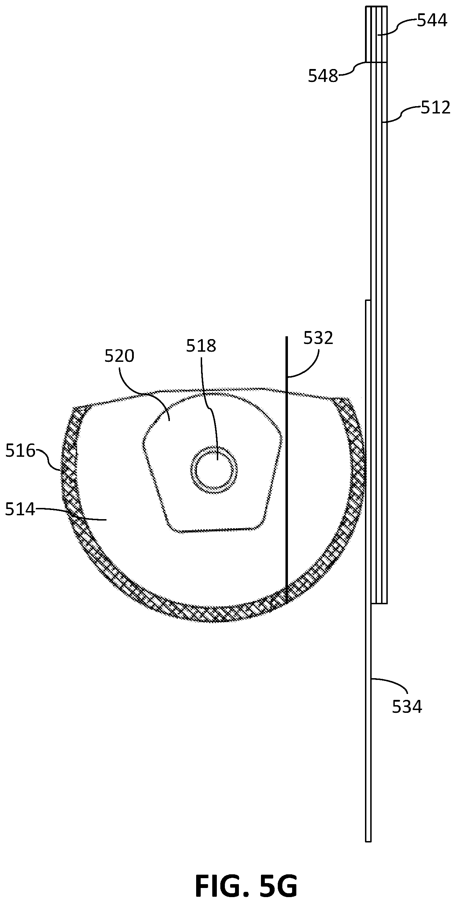

**FIGS. 5A-5J** illustrate an example arrangement of a retracting roller **520,** a sheet supply roller **514,** and a sheet material **512.** Supply roller **514** may include a rubber coating **516.** Supply roller **514** and retracting roller **520** are connected to a shaft **518.**

Retracting roller engages a supporting plate **532.** Supporting plate **532** is illustrated simply in **FIGS. 5A-5J** to avoid the illustration of supporting plate **532** interfering with the view of retracting roller **520** and supply roller **514.** It is understood, however, that the portion of supporting plate **532** illustrated in **FIGS. 5A-5J** may be the only portion of supporting plate **532** that retracting roller **520** engages during operation of the dispensing apparatus.

Sheet material **512** may be oriented in a stack. Sheet material **512** may be attached to a substrate **544.** Sheet material **512** may be connected to substrate **544** via a limited connection **548** configured to break, tear, or otherwise disconnect upon application of a force upon a single sheet **512** by supply roller **514.**

As illustrated in **FIG. 5A****,** the radiused portion of supply roller **514** is oriented away from sheet material **512** between dispensing of articles of sheet material **512.** The radiused portion of the retracting roller **520** is oriented toward sheet material **512** between dispensing of articles of sheet material **512.**

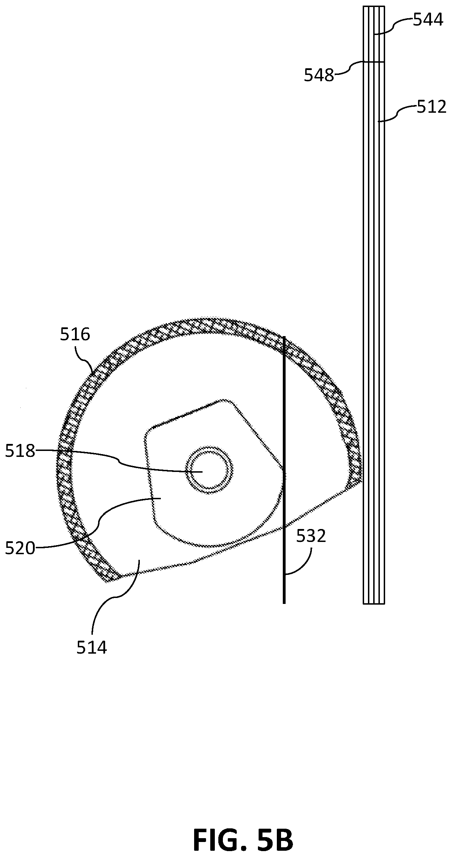

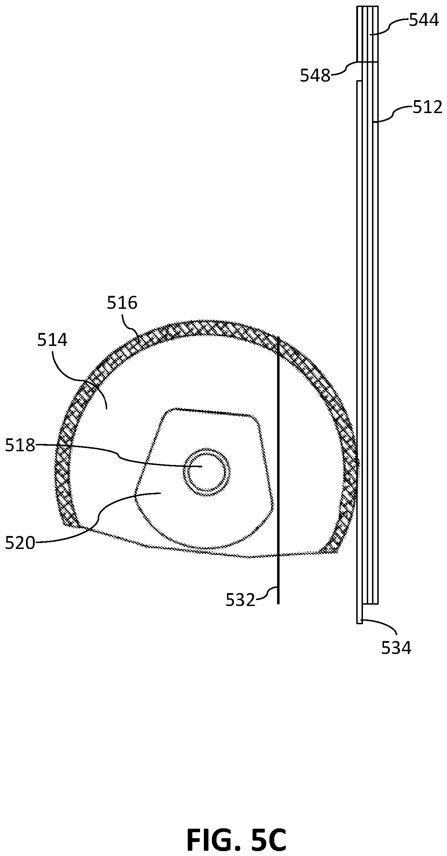

Upon initiation of a dispensing operation, supply roller **514** and retracting roller **520** rotate clockwise (see **FIG. 5B**). **FIGS. 5C-5G** illustrate supply roller **514** contacting and dispensing a dispensed sheet **534,** while retracting roller **520** is rotated such that its radiused portion is out of contact with supporting plate **532.** As a result of retracting roller **520** rotating out of contact with supporting plate **532,** supply roller **514** is permitted to be translated into contact with sheet material **512** due to biasing of mounting plate (**222** in **FIGS. 2A** and **2B**).

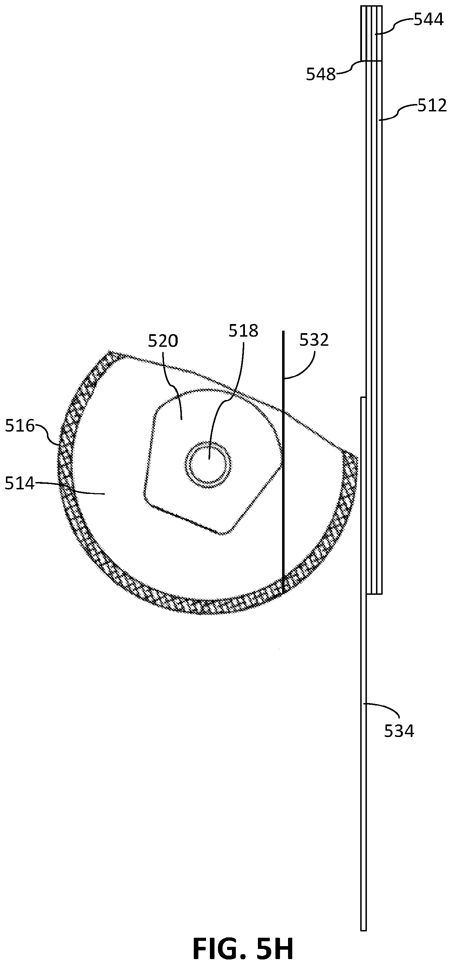

**FIG. 5H** illustrates the radiused portion of retracting roller **520** again contacting supporting plate **532,** causing supply roller **514** (and mounting plate **222**) to move away from sheet material **512.** As illustrated, supply roller **514** is removed from contact with sheet material **512** upon the radiused portion of retracting roller **520** contacting support plate **532.**

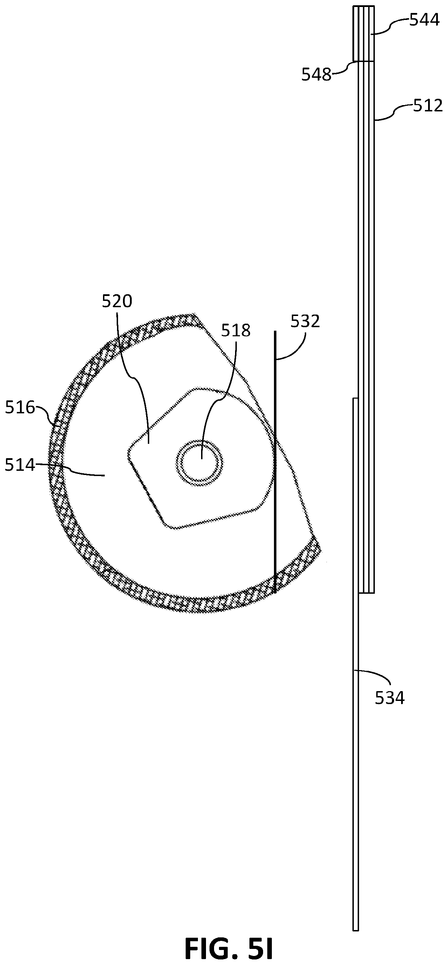

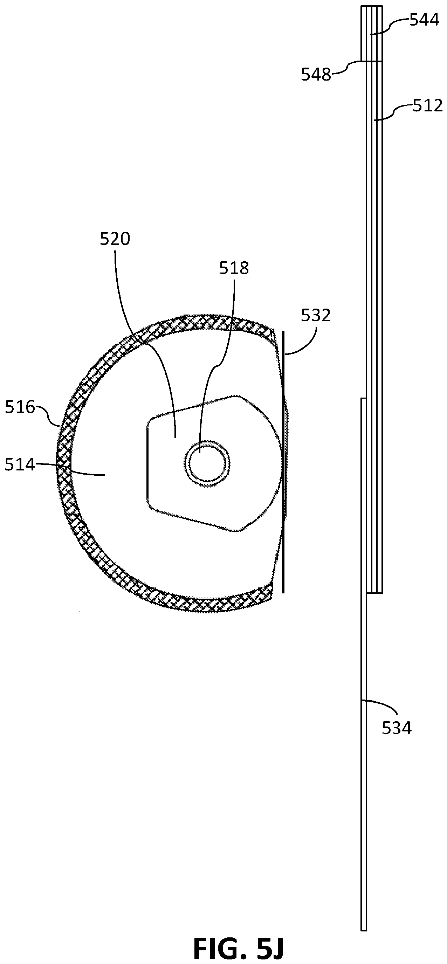

**FIGS. 5I** and **5J** illustrate supply roller **514** (and mounting plate **222**) being forced to move further from sheet material **512.** As a result, a user is able to draw dispensed sheet **534** from the apparatus, without any portion of dispensed sheet **534** engaging, snagging on, or otherwise contacting, any portion of the dispensing mechanism (retracting roller **520,** supply roller **514,** and mounting plate **222**). In this manner, a user is able to remove dispensed sheet **534** without tearing it. In this manner, the dispenser is unlikely to jam, as the use of retracting roller **520** and supply roller **514,** as described herein, provided surprising results in the reliability of the dispensing apparatus.

As illustrated, during dispensing of a single sheet material **512,** supply roller **514** and retracting roller **520** may rotate about 360 degrees. In another embodiment, during dispensing of a single sheet material **512,** supply roller **514** and retracting roller **520** may rotate more than about 360 degrees. In another embodiment, during dispensing of a single sheet material **512,** supply roller **514** and retracting roller **520** may rotate less than about 360 degrees.

**FIG. 6** illustrates a retracting roller **620.** Retracting roller **620** includes a radiused portion **651** and at least one truncated portion **652, 654.** In one embodiment, retracting roller **620** includes two side truncated portions **652,** and one rear truncated portion **654,** rear truncated portion **654** being opposite radiused portion **651,** and side truncated portions **652** being oriented between rear truncated portion **654** and radiused portion **651.** Retracting roller **620** may include a shaft aperture **656** configured to accept a shaft, such as shaft **218, 318, 518.**

**FIG. 7** illustrates a retracting roller **720.** As illustrated, retracting roller **720** includes a radiused portion having a radius **R1**. Retracting roller **720** may include side truncated portions having a radius **R2.** Retracting roller **720** may include rear corner portions having a radius **R3.** Retracting roller **720** may include a rear truncated portion having a radius **R4.** The value of **R1** may be greater than the value of **R2, R3,** and **R4. R3** may be greater than **R2** and **R4,** but lesser than **R1**. **R2** may be about equal to **R4.**

Retracting roller **720** may have an isosceles trapezoid-shaped cross-section, except that the longer base of the isosceles trapezoid has a curved, radiused portion (e.g., **651**).

**FIG. 8** illustrates a sheet supply roller **814.** Supply roller **814** may include a rubber coating **816** covering its radiused portion. Supply roller **814** includes a truncated portion **862.** Supply roller **814** may include a shaft aperture **860** configured to accept a shaft, such as shaft **218, 318, 518.** The radiused portion of supply roller **814** may have a radius **R1**. Truncated portion **862** may have a radius **R2.** The value of radius **R1** may be greater than the value of **R2**.

In one embodiment, supply roller **814** about 70% of a complete cylinder, the 30% being removed to form the truncated cylinder.

As stated above, while the present application has been illustrated by the description of embodiments thereof, and while the embodiments have been described in considerable detail, it is not the intention of the applicants to restrict or in any way limit the scope of the appended claims to such detail. Additional advantages and modifications will readily appear to those skilled in the art, having the benefit of the present application.

## Claims

1. A sheet material dispensing apparatus, comprising:
a cover;
a rear wall connected to the cover;
a flexible mounting plate (322) operatively connected to the cover;
a shaft (318), wherein the shaft is connected to the mounting plate;
a motor (340) operatively connected to the shaft;
a supply roller (314) connected to the shaft, wherein the supply roller has a radiused portion and at least one truncated portion; and
a microswitch activating cam (333) extending from a side of the supply roller, the microswitch activating cam being operable to contact a microswitch (331) fixed on the mounting plate to stop the motor,
the apparatus further , comprising
an electronics box (230) included by said mounting plate (322) and in electrical communication with the motor , (340), **characterised in that** the electronics box (230) includes a chip that is programmed to allow the adjustment of the period of time for which the motor is operated to discharge one piece of the sheet material (230) and that the apparatus further comprises
a retracting roller (320) connected to the shaft, wherein the retracting roller has a radiused portion, and at least one truncated portion; and
a supporting plate (332) engaged and disengaged by the retracting roller during operation, wherein the disengagement of the radiused portion from the supporting plate causes the supply roller to translate toward the rear wall.

2. The apparatus of claim 1 wherein the engagement of the radiused portion to the supporting plate causes the supply roller to retract from the rear wall.

3. The apparatus of claim 2 wherein the radiused portion of the retracting roller is directed in a first direction and the radiused portion of the supply roller is directed in a second direction, wherein the first and second directions are opposing directions.

4. The apparatus of claim **1** wherein the supporting plate (332) is operatively connected to an interior surface of the cover.

5. The apparatus of claim **1** further comprising a sensor **(110)** configured to activate the motor (340), wherein the sensor includes one of a capacitive sensor, an infrared sensor, a light sensor, a touch sensor, a microphone, a temperature sensor, an **RFID** reader, and a shock sensor.

6. The apparatus of claim , 5, further comprising a code reader (233)configured to read a proprietary code to identify sheet material.

7. The apparatus of claim 6, further comprising a sheet material card including at least one article of sheet material oriented between the cover and the rear wall.

8. The apparatus of claim 7, further comprising a magnetic strip, wherein the magnetic strip is located at the sheet material card.

9. The apparatus of claim **1** wherein the electronics box (230) includes acounter configured to count a number of dispenses of sheet material oriented between the cover and the rear wall.

10. The apparatus of claim **1,** wherein the retracting roller (320) includes three truncated portions.

11. The apparatus of claim 10, wherein the radiused portion of the supply roller (314) includes a rubber coating.

12. The apparatus of claim **1,** further comprising a power source.

13. The apparatus of claim 12, wherein the power source includes one of a battery or an electrical source exterior to the apparatus.

## Patentansprüche

1. Bogenmaterial-Ausgabeeinrichtung, umfassend:
eine Abdeckung;
eine Rückwand, die mit der Abdeckung verbunden ist;
eine flexible Montageplatte (322), die funktionsmäßig mit der Abdeckung verbunden ist;
eine Welle (318), wobei die Welle mit der Montageplatte verbunden ist;
einen Motor (340), der funktionsmäßig mit der Welle verbunden ist;
eine Zuführwalze (314), der mit der Welle verbunden ist, wobei die Zuführwalze einen gerundeten Abschnitt und wenigstens einen angeschnittenen Abschnitt aufweist; und
eine einen Mikroschalter aktivierende Nocke (333), die sich von einer Seite der Zuführwalze aus erstreckt, wobei die einen Mikroschalter aktivierende Nocke funktionsfähig ist, einen Mikroschalter (331) zu kontaktieren, der an der Montageplatte befestigt ist, um den Motor anzuhalten,
wobei die Einrichtung weiter eine Elektronikbox (230) umfasst, von der Montageplatte (322) beinhaltet, und in elektrischer Verbindung mit dem Motor (340) ist, **dadurch gekennzeichnet, dass** die Elektronikbox (230) einen Chip beinhaltet, der programmiert ist, um die Anpassung des Zeitraums zu ermöglichen, in dem der Motor funktioniert, um ein Teil des Bogenmaterials (230) auszubringen, und dadurch, dass die Einrichtung weiter umfasst
eine Einziehwalze (320), die mit der Welle verbunden ist, wobei die Einziehwalze einen gerundeten Abschnitt und wenigstens einen angeschnittenen Abschnitt aufweist; und
eine Stützplatte (332), die die während des Betriebs von der Einziehwalze in Eingriff genommen und aus dem Eingriff gelöst wird, wobei das Lösen des Eingriffs des gerundeten Abschnitts von der Stützplatte bewirkt, dass sich die Zuführwalze zu der Rückwand hin verschiebt.

2. Einrichtung nach Anspruch 1, wobei die Eingriffnahme des gerundeten Abschnitts in die Stützplatte bewirkt, dass sich die Zuführwalze von der Rückwand einzieht.

3. Einrichtung nach Anspruch 2, wobei der gerundete Abschnitt der Einziehwalze in eine erste Richtung gerichtet ist und der gerundete Abschnitt der Zuführwalze in eine zweite Richtung gerichtet ist, wobei die erste und zweite Richtung entgegengesetzte Richtungen sind.

4. Einrichtung nach Anspruch 1, wobei die Stützplatte (332) funktionsmäßig mit einer Innenfläche der Abdeckung verbunden ist.

5. Einrichtung nach Anspruch 1, weiter einen Sensor (110) umfassend, der konfiguriert ist, um den Motor (340) zu aktivieren, wobei der Sensor einen von einem kapazitiven Sensor, einem Infrarotsensor, einem Lichtsensor, einem Berührungssensor, einem Mikrofon, einem Temperatursensor, einem RFID-Lesegerät und einem Stoßsensor beinhaltet.

6. Einrichtung nach Anspruch 5, weiter ein Code-Lesegerät (233) umfassend, das konfiguriert ist, um einen Eigentümer-Code zu lesen, um das Bogenmaterial zu identifizieren.

7. Einrichtung nach Anspruch 6, weiter eine Bogenmaterialkarte umfassend, die mindestens einen Artikel eines Bogenmaterials beinhaltet, der zwischen der Abdeckung und der Rückwand ausgerichtet ist.

8. Einrichtung nach Anspruch 7, weiter einen Magnetstreifen umfassend, wobei sich der Magnetstreifen auf der Bogenmaterialkarte befindet.

9. Einrichtung nach Anspruch 1, wobei die Elektronikbox (230) einen Zähler beinhaltet, der konfiguriert ist, um eine Anzahl von Ausgaben von Bogenmaterial zu zählen, das zwischen der Abdeckung und der Rückwand ausgerichtet ist.

10. Einrichtung nach Anspruch 1, wobei die Einziehwalze (320) drei angeschnittene Abschnitte beinhaltet.

11. Einrichtung nach Anspruch 10, wobei der gerundete Abschnitt der Zuführwalze (314) eine Gummibeschichtung beinhaltet.

12. Einrichtung nach Anspruch 1, weiter eine Energiequelle umfassend.

13. Einrichtung nach Anspruch 12, wobei die Energiequelle eines von einer Batterie oder einer Stromquelle außerhalb der Einrichtung beinhaltet.

## Revendications

1. Appareil de distribution de matériau en feuille, comprenant :
un couvercle ;
une paroi arrière raccordée au couvercle ;
une plaque de montage flexible (322) raccordée de manière opérationnelle au couvercle ;
un arbre (318), l'arbre étant raccordé à la plaque de montage ;
un moteur (340) raccordé de manière opérationnelle à l'arbre ;
un rouleau d'alimentation (314) raccordé à l'arbre, le rouleau d'alimentation ayant une partie arrondie et au moins une partie tronquée ; et
une came actionnant un microrupteur (333) s'étendant d'un côté du rouleau d'alimentation, la came actionnant un microrupteur pouvant fonctionner pour communiquer avec un microrupteur (331) fixé sur la plaque de montage pour arrêter le moteur,
l'appareil comprenant en outre
un boîtier électronique (230) inclus par ladite plaque de montage (322) et en communication électrique avec le moteur (340), **caractérisé en ce que** le boîtier électronique (230) inclut une puce qui est programmée pour permettre l'ajustement de la période de temps pendant laquelle le moteur fonctionne pour libérer un morceau du matériau en feuille (230) et ce que l'appareil comprend en outre
un rouleau de rétraction (320) raccordé à l'arbre, le rouleau de rétraction ayant une partie arrondie, et au moins une partie tronquée ; et
une plaque de support (332) engagée et désengagée par le rouleau de rétraction durant le fonctionnement, le désengagement de la partie arrondie de la plaque de support entraînant le déplacement du rouleau d'alimentation vers la paroi arrière.

2. Appareil selon la revendication 1, dans lequel l'engagement de la partie arrondie avec la plaque de support entraîne la rétraction du rouleau d'alimentation à partir de la paroi arrière.

3. Appareil selon la revendication 2, dans lequel la partie arrondie du rouleau de rétraction est dirigée dans une première direction et la partie arrondie du rouleau d'alimentation est dirigée dans une seconde direction, les première et seconde directions étant des directions opposées.

4. Appareil selon la revendication 1, dans lequel la plaque de support (332) est raccordée de manière opérationnelle à une surface intérieure du couvercle.

5. Appareil selon la revendication 1, comprenant en outre un capteur (110) configuré pour actionner le moteur (340), dans lequel le capteur inclut un parmi un capteur capacitif, un capteur infrarouge, un capteur de lumière, un capteur tactile, un microphone, un capteur de température, un lecteur RFID, et un capteur de choc.

6. Appareil selon la revendication 5, comprenant en outre un lecteur de code (233) configuré pour lire un code propriétaire pour identifier un matériau en feuille.

7. Appareil selon la revendication 6, comprenant en outre une carte de matériau en feuille incluant au moins un article de matériau en feuille orienté entre le couvercle et la paroi arrière.

8. Appareil selon la revendication 7, comprenant en outre une bande magnétique, dans lequel la bande magnétique est située au niveau de la carte de matériau en feuille.

9. Appareil selon la revendication 1, dans lequel le boîtier électronique (230) inclut un compteur configuré pour compter un nombre de distributions de matériau en feuille orienté entre le couvercle et la paroi arrière.

10. Appareil selon la revendication 1, dans lequel le rouleau de rétraction (320) inclut trois parties tronquées.

11. Appareil selon la revendication 10, dans lequel la partie arrondie du rouleau d'alimentation (314) inclut un revêtement en caoutchouc.

12. Appareil selon la revendication 1, comprenant en outre une source d'énergie.

13. Appareil selon la revendication 12, dans lequel la source d'énergie inclut une parmi une batterie ou une source électrique extérieure à l'appareil.
